# FASCICULE DE BREVET EUROPEEN

(11) **EP 1 273 814 B1**
(45) Date de publication et mention de la délivrance du brevet: **14.03.2007**
(21) Numéro de dépôt: 02291547.4
(22) Date de dépôt: 20.06.2002
(51) Int. Cl.: F16C 33/66, F03D 11/00, F16N 11/00

(54) **Dispositif pour améliorer le graissage de roulements équipant notamment des éoliennes**
Vorrichtung zur Verbesserung der Schmierung von Wälzlagern insbesondere für Windturbinen
Device for improving lubrication of rolling bearings especially for wind turbines

(30) Priorité: 06.07.2001 FR 0109029
(43) Date de publication de la demande: 08.01.2003
(73) Titulaire: S.A. Defontaine, 85530 La Bruffière (FR)
(72) Inventeur: Jacquemont, Eric, 44190 Clisson (FR); Errard Germain, 44390 Clisson (FR)
(74) Mandataire: Rémont, Claude

(56) Documents cités:
- DE-A- 4 432 986
- GB-A- 2 055 154
- US-A- 3 007 751
- US-A- 3 940 191
- US-A- 4 577 705
- US-A- 4 668 109
- US-A- 4 722 616
- US-A- 4 778 285
- US-A- 5 441 120
- US-A- 5 484 212

## Description

La présente invention concerne une turbine à pales orientables entraînée par un fluide et dont l'axe de rotation est parallèle à l'axe d'écoulement du fluide, et plus précisément un dispositif pour améliorer le graissage de roulements à billes ou à rouleaux des couronnes d'orientation des pales orientables.

On connaît un dispositif pour améliorer le graissage d'un roulement monté entre deux couronnes concentriques pivotant l'une par rapport à l'autre, et délimitant un espace annulaire qui renferme le roulement et qui est rempli de graisse et est fermé par des joints d'étanchéité, au moins un conduit à graisse étant prévu entre la périphérie d'une des deux couronnes et ledit espace annulaire et étant relié à un réservoir à graisse correspondant. La demande GB 2 055 154 divulgue un tel dispositif dont le réservoir se contracte en cas d'élévation de la température (causé par un défaut de graisse), causant le refoulement de la graisse dans l'espace annulaire via le conduit.

Cependant ce dispositif n'est pas adapté ni aux couronnes d'orientation des pales orientables équipant les éoliennes dont l'axe de rotation du rotor est situé en permanence sensiblement dans l'axe du vent, ainsi qu'aux turbines quelconques à pales orientables qui sont entraînées par un fluide et dont l'axe de rotation est parallèle à l'axe d'écoulement du fluide, ni à tout roulement travaillant dans des conditions comparables.

En effet, les éoliennes de ce type sont généralement montées sur un mât et comprennent un stator fixé de manière à pouvoir pivoter autour de l'axe du mât et ainsi s'orienter en fonction de la direction du vent, et un rotor supportant un certain nombre de pales. Pour pouvoir contrôler la vitesse de rotation du rotor et en particulier éviter qu'elle n'excède une certaine limite, les pales sont montées pivotantes sur le rotor de manière à pouvoir pivoter autour de leur axe longitudinal.
A cet effet, le stator, aussi bien que les pales sont montés sur des ensembles de couronnes concentriques à roulement à billes ou à rouleaux, chaque ensemble comprenant une couronne support considérée fixe, une couronne mobile en rotation dans la couronne fixe, et un roulement à billes ou à rouleaux intermédiaire entre la couronne fixe et la couronne mobile, pour réduire les frottements de la couronne mobile sur la couronne fixe.

Or ces roulements sont soumis à de nombreuses contraintes. Comme l'éolienne est exposée aux intempéries, ils doivent être protégés dans des logements étanches, et ce d'autant plus qu'ils sont relativement peu sollicités en rotation. Il est donc nécessaire d'utiliser des joints d'étanchéité par exemple du type joint annulaire à lèvres toriques, et d'assurer un bon graissage des roulements par de la graisse retenue par lesdits joints d'étanchéité dans lesdits logements.

Il s'avère que les couronnes d'orientation des pales sont, du fait de leur position sur l'éolienne et des forces transmises par les pales, soumises à des efforts dissymétriques. Comme ces couronnes sont toujours exposées au vent dans une même direction qui est la direction de l'axe du rotor et qui est de ce fait parallèle à une direction radiale de leur plan, on peut remarquer qu'avec le temps la graisse n'est pas répartie d'une manière uniforme dans le roulement sur la circonférence des couronnes, mais a tendance à suivre le vent en s'accumulant du côté non exposé au vent.

En outre, les couronnes d'orientation des pales sont soumises à de fortes contraintes mécaniques résultant du moment de flexion transmis aux roulements par les pales disposées perpendiculairement à la direction du vent. Il en résulte un mouvement relatif, autre que celui de leur rotation, des deux couronnes l'une par rapport à l'autre.
Les couronnes mobiles sont également soumises à des forces centrifuges dues à la rotation du rotor et des pales qui influe également sur la répartition de la graisse dans le roulement.

Ces contraintes mécaniques dissymétriques affectent la répartition de la graisse dans les roulements et engendrent des surpressions qui entraînent des fuites de graisse par les joints d'étanchéité qui ne sont pas conçus pour supporter de telles pressions.
Il en résulte un graissage non optimal des roulements qui affecte la durée de vie des couronnes qui doivent être remplacées relativement fréquemment.

Par conséquent, il est nécessaire de prévoir des opérations de maintenance relativement rapprochées, notamment pour nettoyer les parties de l'éolienne souillées par la graisse qui s'est échappée des roulements et pour réinjecter de la graisse dans ces derniers par des orifices prévus dans les couronnes fixes. Ces inconvénients affectent d'une manière importante le coût d'exploitation de telles éoliennes.

La présente invention a pour but de supprimer ces inconvénients.

L'invention est une turbine adaptée à être entraînée par un fluide et comprenant un stator, un rotor monté rotatif sur le stator selon un axe de rotation qui est orienté de façon sensiblement permanente parallèlement à la direction du fluide, et des pales montées pivotante sur le rotor autour de leur axe longitudinal respectif par l'intermédiaire d'un ensemble de couronnes d'orientation à roulement correspondant, chaque ensemble de couronnes d'orientation à roulement comprenant deux couronnes concentriques pivotant l'une par rapport à l'autre, et délimitant un espace annulaire qui renferme le roulement, qui est rempli de graisse et qui est fermé par des joints d'étanchéité, la couronne solidaire de la pale étant soumise à des efforts dissymétriques dirigés essentiellement selon l'axe de rotation dans un secteur angulaire principal de l'autre couronne, au moins un conduit principal de graissage débouchant dans l'espace annulaire dans le secteur angulaire principal, chaque conduit principal de graissage étant relié à un réservoir principal à graisse correspondant adapté à recevoir de la graisse provenant de l'espace annulaire par le conduit principal de graissage sous l'effet d'une surpression régnant dans l'espace annulaire au niveau du secteur angulaire principal, le secteur angulaire principal étant soit la région en aval par rapport au fluide si la couronne intérieure est fixée à la pale, soit la région en amont si elle est fixée au rotor.

Selon l'invention un tel dispositif pour améliorer le graissage d'un roulement peut équiper les couronnes d'orientation des pales orientables d'une éolienne comprenant un mât, un stator monté pivotant sur le mât par l'intermédiaire d'un ensemble de couronnes à roulement et un rotor supportant des pales, le stator et le rotor étant orientés de manière telle que l'axe de rotation du rotor est situé en permanence sensiblement dans la direction du vent, les pales étant montés rotatives sur le rotor autour de leur axe longitudinal par l'intermédiaire d'ensemble de couronnes à roulement, chaque ensemble de couronnes comprenant deux couronnes concentriques pivotant l'une par rapport à l'autre et délimitant l'espace annulaire décrit ci-dessus.

Selon un mode préférentiel de réalisation, le dispositif précité comporte au moins un conduit à graisse complémentaire débouchant dans l'espace annulaire dans un secteur angulaire complémentaire sensiblement diamétralement opposé au secteur principal, et en ce que chaque conduit à graisse complémentaire est relié à un réservoir complémentaire correspondant adapté à diffuser de la graisse dans l'espace annulaire.

De plus la graisse ayant tendance à s'accumuler dans au moins un secteur angulaire déterminé dudit espace annulaire les réservoirs situés à proximité dudit secteur annulaire sont montés vides et aptes à recevoir de la graisse en excès et/ou de l'air en surpression dans ledit secteur angulaire, et les réservoirs situés dans le secteur angulaire complémentaire opposé audit secteur angulaire principal sont montés remplis de graisse et aptes à injecter de la graisse dans ledit espace annulaire ; des canalisations peuvent relier entre eux les conduits à graisse et/ou les réservoirs avec des moyens pour tranférer la graisse en excès dudit secteur angulaire principal vers le secteur angulaire complémentaire opposé via ces canalisations.

Chaque réservoir est déformable et dans des modes particuliers de réalisation peut comporter des soufflets pour pouvoir se déformer ; il peut être constitué d'une poche en matière souple.

Grâce à ces dispositions, les réservoirs selon l'invention peuvent compenser les variations et déplacements de volume de la graisse, mais également de l'air, contenus dans la couronne en fonction des variations de pression qui peuvent se produire suivant les explications données précédemment mais également suivant la température, l'usure, etc..... En particulier les réservoirs situés en amont par rapport au vent ayant alors tendance à se vider injectent de la graisse dans les zones en déficit de graisse, tandis que les réservoirs en aval du vent ayant tendance à se remplir absorbent ainsi les surpressions d'air et de graisse. La pression de la graisse à l'intérieur du roulement se trouve donc régulée et répartie d'une manière plus uniforme sur toute la circonférence des couronnes, tout en supprimant le risque de surpressions qui ne sont pas supportées par les joints d'étanchéité. Il en résulte que les fuites de graisse par les joints d'étanchéité sont quasiment supprimés.

En plaçant et montant des réservoirs de graisse pleins en amont et des réservoirs vides en aval du vent, les roulements se trouvent ainsi graissés d'une manière optimale pendant une longue période. La durée de vie des couronnes se trouve donc considérablement augmentée.

En outre, l'invention permet de réduire d'une manière importante non seulement la fréquence des opérations de maintenance, mais également leur durée, étant donné qu'il n'est plus nécessaire de nettoyer les fuites de graisse.

Un mode de réalisation préféré de l'invention sera décrit ci-après, à titre d'exemple, avec référence aux dessins annexés dans lesquels :
- La figure 1 représente schématiquement en vue partielle en perspective une éolienne adaptée à recevoir un dispositif selon la présente invention ;
- La figure 2 représente schématiquement en vue en plan un ensemble de couronnes d'orientation d'une pale de rotor
- d'éolienne, équipée d'un dispositif selon un mode de réalisation selon l'invention ;
- La figure 3 est une vue partielle agrandie en coupe transversale selon III-III à la figure 2 ;
- La figure 4 est une vue partielle en coupe selon IV-IV à la figure 3 ;
- La figure 5 est une vue semblable à la figure 4 illustrant un autre mode de réalisation de l'invention.

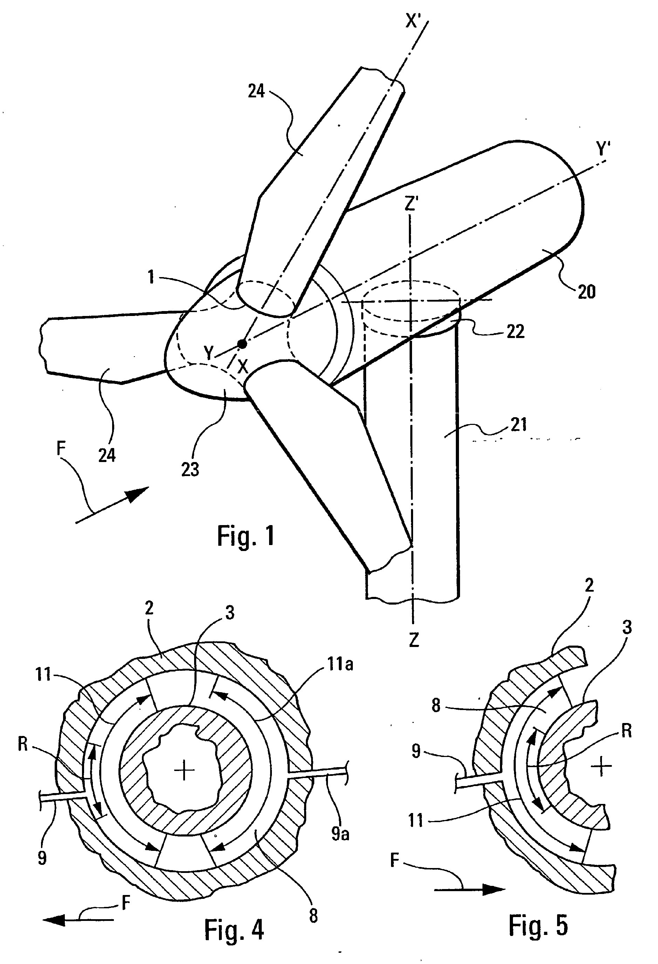

Sur la figure 1, l'éolienne comprend une nacelle 20 montée rotative sur un mât 21 vertical, par l'intermédiaire d'un premier ensemble de couronne à roulement 22, de manière à pouvoir tourner autour d'un axe zz' vertical pour pouvoir s'orienter en fonction de la direction du vent. La nacelle 20 est solidaire d'un stator dans lequel est monté rotatif un rotor 23 tournant autour d'un axe yy'. Des pales 24, par exemple trois, sont montées pivotantes sur le rotor, par l'intermédiaire d'un ensemble 1 de couronnes à roulement respectif, de manière à pouvoir pivoter autour de l'axe longitudinal xx' de la pale. De cette manière, on peut faire tourner la pale autour de son axe pour réguler la vitesse de rotation du rotor en fonction de la vitesse du vent, et notamment pour maintenir une vitesse de rotation du rotor sensiblement constante quelle que soit la vitesse du vent.

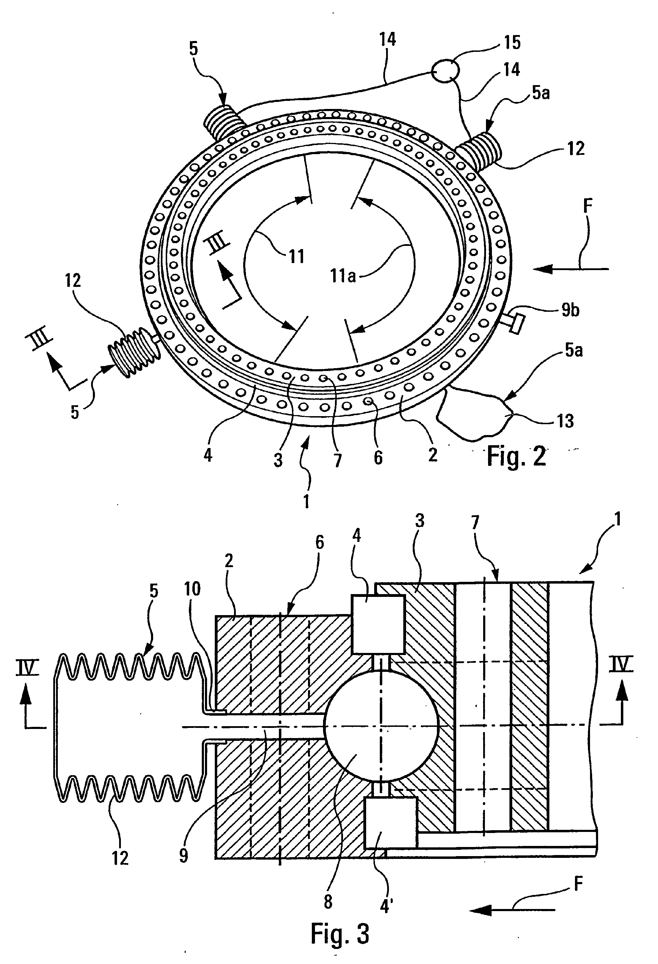

La figure 2 représente en détail un ensemble 1 de couronnes d'orientation d'une pale 24 de rotor 23 d'éolienne. Cet ensemble comprend deux couronnes 2, 3 concentriques, à savoir une couronne extérieure 2 fixée sur le rotor de l'éolienne, et une couronne 3 intérieure coaxiale, montée rotative dans la couronne 2 extérieure et solidaire de la pale 24. Tel que représenté plus en détail sur la figure 3, l'espace entre les deux couronnes 2, 3 délimite un espace annulaire 8 pour loger un roulement, par exemple du type à billes, permettant de réduire les frottements entre les deux couronnes, lorsque la couronne intérieure 3 pivote dans la couronne extérieure 2. Le roulement, d'un type quelconque connu, n'est pas représenté pour la clarté des figures.

Le volume annulaire 8 du roulement à billes ou à rouleaux est fermé par un joint d'étanchéité 4, 4' supérieur et inférieur.

Les deux couronnes 2, 3 comprennent en outre une pluralité de perçages transversaux 6, 7 uniformément répartis sur leur périphérie pour leur fixation respectivement sur le rotor et avec une pale.

Les joints d'étanchéité 4 ,4' sont par exemple constitués par des joints annulaires toriques à lèvres.

Suivant la présente invention, et la couronne mobile 3 étant soumise à des efforts dissymétriques dirigés essentiellement dans la direction du vent, schématisée par la flèche F aux figures, vers une région R de la couronne fixe 2, au moins un conduit à graisse 9 débouche dans l'espace annulaire 8 dans un secteur angulaire 11 entourant la région R.

Un réservoir 5 correspondant est adapté à recevoir de la graisse provenant de l'espace annulaire 8 par ledit conduit 9 sous l'effet d'une surpression pouvant régner dans l'espace annulaire 8 au niveau dudit secteur angulaire 11.

Dans le mode de réalisation représenté aux figures, le dispositif comporte au moins un conduit à graisse complémentaire 9a débouchant dans l'espace annulaire 8 dans un secteur angulaire complémentaire 11a sensiblement diamétralement opposé au secteur angulaire principal 11, et en ce que chaque conduit à graisse complémentaire 9a est relié à un réservoir complémentaire 5a correspondant adapté à diffuser de la graisse dans l'espace annulaire 8.

Les réservoirs 5, 5a comprennent par exemple une ouverture tubulaire 10 prévue pour s'engager avec étanchéité dans un conduit de graissage 9, 9a correspondant.
Ils sont de préférence déformables pour pouvoir se remplir ou se vider de graisse sans engendrer de contre-pressions.
Ils peuvent être réalisés dans un matériau rigide et être munis d'au moins un soufflet 12, comme représenté sur les figures 2 et 3, pour pouvoir se déformer. Il peuvent également être réalisés dans un matériau déformable, par exemple une poche 13 en une matière souple telle qu'un film plastique.

Avantageusement, on dispose des réservoirs 5 remplis de graisse aux points de graissage situés en amont par rapport au vent, et des réservoirs 5a vides aux points de graissage situés en aval. De cette manière, tant que les réservoirs amont 5 ne sont pas totalement vides et les réservoirs aval 5a ne sont pas totalement remplis, la répartition de la graisse dans le volume 8, ainsi que sa pression, est sensiblement homogène dans l'ensemble de l'espace annulaire 8. Il suffit donc de prévoir des opérations de maintenance suffisamment fréquentes pour échanger les réservoirs vides par les réservoirs pleins et réciproquement, et éventuellement pour ajouter un peu de graisse dans les réservoirs pleins de manière à compenser les faibles pertes qui ne seraient pas supprimées totalement par le dispositif suivant l'invention.

Les opérations de graissage sont courtes car elles ne nécessitent que le changement des réservoirs 5, 5a.

Alternativement, on peut prévoir de relier tous les réservoirs 5, 5a ou directement les conduits de graissage 9, 9a par une canalisation externe, schématisée en 14 à la figure 2, sur laquelle est montée une pompe 15 permettant de refouler la graisse des zones d'accumulation de graisse vers les zones en déficit de graisse. Bien entendu, il n'est pas nécessaire que la pompe fonctionne en permanence, mais uniquement à une fréquence suffisante pour éviter que, les réservoirs 5 situés en aval par rapport à la direction du vent étant pleins, les surpressions dans le secteur angulaire aval ne provoquent une fuite de graisse à travers les joints 4,4'. De cette manière, les opérations de maintenance peuvent être encore davantage espacées dans le temps, et simplement consister à compenser les pertes de graisse. A ce sujet, et comme schématisé à la figure 2, le dispositif comporte en outre au moins un conduit de graissage 9b prévu entre la périphérie de l'une des deux couronnes 2, 3 et l'espace annulaire 8 et adapté à être relié à un dispositif de graissage (non représenté) permettant d'injecter de la graisse dans l'espace annulaire 8 depuis l'extérieur.

On a ainsi décrit un dispositif pour améliorer le graissage d'un roulement monté entre deux couronnes concentriques dont l'une pivote par rapport à l'autre, considérée comme fixe, la couronne pivotante étant soumise à des efforts dissymétriques transmis par le roulement à la couronne fixe.

Le dispositif selon la présente invention comporte au moins un conduit à graisse 9 relié à un réservoir 5 initialement vide. Comme schématisé à la figure 4, le réservoir 5 unique est avantageusement placé dans la région R située sensiblement autour du rayon parallèle à la direction F du vent.

Un réservoir 5 unique est avantageusement combiné à au moins un réservoir complémentaire 5a initialement plein de graisse. Dans le cas d'un unique réservoir complémentaire Sa, ce réservoir est avantageusement placé dans une position diamétralement opposée à celle du réservoir principal 5, comme schématisé à la figure 4.

Dans le mode de réalisation représenté à la figure 2, la couronne extérieure fixe 2 comporte, par exemple, quatre conduits à graisse, deux conduits à graisse 9 reliés chacun à un réservoir principal 5 correspondant, et deux conduits à graisse complémentaires 9a reliés chacun à un réservoir complémentaire 5a correspondant.

Les réservoirs principaux 5 et les réservoirs complémentaires 5a peuvent être disposés d'une manière adéquate quelconque sur la circonférence de la couronne extérieure 2. Avantageusement, les deux réservoirs principaux 5 sont symétriques l'un de l'autre par rapport au diamètre parallèle à la direction du vent, et il en est de même des deux réservoirs complémentaires 5a qui peuvent être avantageusement chacun diamétralement opposé à un réservoir principal 5 correspondant.

Les secteurs angulaires 11 et 11a peuvent correspondre à un angle au centre adéquat quelconque.

Dans le mode de réalisation des figures 2 à 4, on a supposé, ce qui est habituel, que la couronne extérieure 2 est fixée sur le rotor 23, et que la couronne intérieure 3 pivote à l'intérieur de la couronne 2.

Dans le mode de réalisation de la figure 5, la couronne intérieure 3 est fixée au rotor 23 et la couronne extérieure 2 pivote autour de la couronne intérieure 3.

Dans ce mode de réalisation, la région R qui reçoit principalement les efforts dissymétriques dus au vent est une région de la couronne intérieure 3, et le secteur angulaire principal 11 susceptible de subir des surpressions est situé en amont par rapport à la direction du vent.

Les conduits à graisse principaux 9 et complémentaires 9a sont avantageusement ménagés dans la couronne fixée à la nacelle, mais peuvent également être ménagés dans la couronne qui pivote autour de la couronne fixe, comme schématisé à la figure 5.

## Revendications

1. Turbine adaptée à être entraînée par un fluide et comprenant un stator (20), un rotor (23) monté rotatif sur le stator (20) selon un axe de rotation (YY') qui est orienté de façon sensiblement permanente parallèlement à la direction du fluide, et des pales (24) montées pivotante sur le rotor (23) autour de leur axe longitudinal (XX') respectif par l'intermédiaire d'un ensemble de couronnes d'orientation à roulement (1) correspondant, chaque ensemble de couronnes d'orientation à roulement (1) comprenant deux couronnes (2,3) concentriques pivotant l'une par rapport à l'autre, et délimitant un espace annulaire (8) qui renferme le roulement, qui est rempli de graisse et qui est fermé par des joints d'étanchéité (4,4'), la couronne (2,3) solidaire de la pale (24) étant soumise à des efforts dissymétriques dirigés essentiellement selon l'axe de rotation (YY') dans un secteur angulaire principal (11) de l'autre couronne (3,2), au moins un conduit principal de graissage (9) débouchant dans l'espace annulaire (8) dans le secteur angulaire principal (11), chaque conduit principal de graissage (9) étant relié à un réservoir principal à graisse (5) correspondant adapté à recevoir de la graisse provenant de l'espace annulaire (8) par le conduit principal de graissage (9) sous l'effet d'une surpression régnant dans l'espace annulaire (8) au niveau du secteur angulaire principal (11), le secteur angulaire principal (11) étant soit la région en aval par rapport au fluide si la couronne intérieure (3) est fixée à la pale (24), soit la région en amont si elle est fixée au rotor (23).

2. Turbine selon la revendication 1, **caractérisée en ce qu'**un réservoir principal à graisse (5) est placé dans une région (R) située sensiblement autour du rayon parallèle à l'axe de rotation (YY').

3. Turbine selon la revendication 1 ou 2, **caractérisée en ce qu'**elle comprend deux réservoirs principaux à graisse (5) disposés symétriquement par rapport à l'axe de rotation (Y'Y').

4. Turbine selon l'une des revendications 1 à 3, **caractérisée en ce qu'**elle comporte au moins un conduit complémentaire de graissage (9a) débouchant dans l'espace annulaire (8) dans un secteur angulaire complémentaire (11a) sensiblement diamétralement opposé au secteur angulaire principal (11), chaque conduit complémentaire de graissage (9a) étant relié à un réservoir complémentaire à graisse (5a) correspondant adapté à diffuser de la graisse dans l'espace annulaire (8).

5. Turbine selon la revendication 4, **caractérisée en ce qu'**un réservoir complémentaire à graisse (5a) est placé dans une position diamétralement opposée à celle du réservoir principal à graisse (5).

6. Turbine selon la revendication 4 ou 5, **caractérisée en ce qu'**elle comprend deux réservoirs complémentaires à graisse (5a) disposés symétriquement par rapport à l'axe de rotation (YY').

7. Turbine selon l'une des revendications 4 à 6, **caractérisée en ce qu'**elle comprend des canalisations (14) reliant entre eux les conduits principaux et complémentaires de graissage (9,9a), et des moyens (15) pour transférer la graisse en excès du secteur angulaire principal (11) vers le secteur angulaire complémentaire (11a) via les canalisations (14).

8. Turbine selon l'une des revendications 1 à 7, **caractérisée en ce que** chaque réservoir principal à graisse (5) et, le cas échéant, chaque réservoir complémentaires à graisse (5a) est déformable.

9. Turbine selon la revendication 8, **caractérisée en ce que** l'un au moins des réservoirs déformables (5,5a) comporte au moins un soufflet (12) pour pouvoir se déformer.

10. Turbine selon la revendication 8 ou 9, **caractérisée en ce que** l'un au moins des réservoirs déformables (5, 5a) est constitué d'une poche en matière souple (13).

11. Turbine selon l'une des revendications 1 à 10, **caractérisée en ce qu'**elle comporte au moins un conduit de graissage (9b) prévu entre la périphérie de l'une des deux couronnes (2,3) et l'espace annulaire (8) et adapté à être relié à un dispositif de graissage permettant d'injecter de la graisse dans l'espace annulaire (8).

12. Turbine selon l'une des revendications 1 à 11, **caractérisée en ce qu'**elle forme une éolienne comprenant un mât (21), le stator (20) étant monté pivotant sur le mât (21) par l'intermédiaire d'un ensemble supplémentaire de couronnes d'orientation à roulement (22) de manière telle que l'axe de rotation (YY') du rotor (23) est orienté de façon sensiblement permanente dans la direction du fluide formé par le vent, l'ensemble supplémentaire de couronnes d'orientation à roulement (22) comprenant deux couronnes (2,3) concentriques supplémentaires pivotant l'une par rapport à l'autre, et délimitant un espace annulaire supplémentaire (8) qui renferme le roulement, qui est rempli de graisse et qui est fermé par des joints d'étanchéité supplémentaires (4,4').

13. Eolienne selon la revendication 12, **caractérisée en ce que**, dans l'ensemble supplémentaire de couronnes d'orientation à roulement (22), la couronne supplémentaire mobile est soumise à des efforts dissymétriques dirigés essentiellement vers une région supplémentaire de la couronne fixe supplémentaire, au moins un conduit principal supplémentaire de graissage débouchant dans l'espace annulaire supplémentaire dans un secteur angulaire principal supplémentaire qui entoure la région supplémentaire, et étant relié à un réservoir principal supplémentaire à graisse qui est-adapté à recevoir de la graisse provenant de l'espace annulaire supplémentaire par le conduit principal supplémentaire de graissage sous l'effet d'une surpression régnant dans l'espace annulaire supplémentaire au niveau du secteur angulaire principal supplémentaire.

14. Eolienne selon la revendication 13, **caractérisée en ce qu'**elle comporte au moins un conduit complémentaire supplémentaire de graissage débouchant dans l'espace annulaire supplémentaire dans un secteur angulaire complémentaire supplémentaire sensiblement diamétralement opposé au secteur angulaire principal supplémentaire, chaque conduit complémentaire supplémentaire de graissage étant relié à un réservoir complémentaire supplémentaire à graisse adapté à diffuser de la graisse dans l'espace annulaire supplémentaire.

15. Eolienne selon la revendication 14, **caractérisée en ce qu'**elle comprend des canalisations supplémentaires reliant entre eux les conduits principaux et complémentaires supplémentaires de graissage, et des moyens supplémentaires pour transférer la graisse en excès du secteur angulaire principal supplémentaire vers le secteur angulaire complémentaire supplémentaire via les canalisations supplémentaires.

16. Eolienne l'une des revendications 13 à 15, **caractérisée en ce que** chaque réservoir principal supplémentaire à graisse et, le cas échéant, chaque réservoir complémentaires supplémentaire à graisse est déformable.

17. Eolienne selon la revendication 16, **caractérisée en ce que** l'un au moins des réservoirs supplémentaires déformables comporte au moins un soufflet pour pouvoir se déformer.

18. Eolienne selon la revendication 16 ou 17, **caractérisée que** l'un au moins des réservoirs supplémentaires déformables est constitué d'une poche en matière souple.

19. Eolienne selon l'une des revendications 12 à 18, **caractérisée en ce qu'**elle comporte au moins un conduit de graissage supplémentaire prévu entre la périphérie de l'une des deux couronnes supplémentaires et l'espace annulaire supplémentaire et adapté à être relié à un dispositif de graissage permettant d'injecter de la graisse dans l'espace annulaire supplémentaire.

## Claims

1. Turbine suitable for being driven by a fluid and comprising a stator (20), a rotor (23) mounted so as to rotate on the stator (20) along an axis of rotation (YY') that is oriented substantially permanently parallel to the direction of the fluid, and blades (24) mounted so as to pivot on the rotor (23) about their respective longitudinal axis (XX') by means of a corresponding set of rolling bearing slewing rings (1) each set of rolling bearing slewing rings (1) comprising two concentric rings (2, 3) pivoting on one another, and delimiting an annular space (8) that encloses the rolling bearing, that is filled with grease and that is closed by seals (4, 4'), the ring (2, 3) fixedly attached to the blade (24) being subjected to dissymmetrical forces directed essentially along the axis of rotation (YY') in a main angular sector (11) of the other ring (3, 2), at least one main greasing duct (9) leading into the annular space (8) in the main angular sector (11), each main greasing duct (9) being connected to a corresponding main grease reservoir (5) suitable for receiving grease originating from the annular space (8) via the main greasing duct (9) under the effect of an overpressure existing in the annular space (8) in the main angular sector (11), the main angular sector (11) being either the downstream region relative to the fluid if the inner ring (3) is attached to the blade (24), or the upstream region if it is attached to the rotor (23).

2. Turbine according to Claim 1, **characterized in that** a main grease reservoir (5) is placed in a region (R) situated substantially around the radius parallel to the axis of rotation (YY').

3. Turbine according to Claim 1 or 2, **characterized in that** it comprises two main grease reservoirs (5) placed symmetrically relative to the axis of rotation (YY').

4. Turbine according to one of Claims 1 to 3, **characterized in that** it comprises at least one complementary greasing duct (9a) opening into the annular space (8) in a complementary angular sector (11a) substantially diametrically opposed to the main angular sector (11), each complementary greasing duct (9a) being connected to a corresponding complementary grease reservoir (5a) suitable for diffusing grease in the annular space (8).

5. Turbine according to Claim 4, **characterized in that** a complementary grease reservoir (5a) is placed in a position diametrically opposed to that of the main grease reservoir (5).

6. Turbine according to Claim 4 or 5, **characterized in that** it comprises two complementary grease reservoirs (5a) placed symmetrically relative to the axis of rotation (XY').

7. Turbine according to one of Claims 4 to 6, **characterized in that** it comprises pipes (14) connecting the main and complementary greasing ducts (9, 9a) together, and means (15) for transferring the excess grease from the main angular sector (11) to the complementary angular sector (11a) via the pipes (14).

8. Turbine according to one of Claims 1 to 7, **characterized in that** each main grease reservoir (5) and, where appropriate, each complementary grease reservoir (5a) is deformable.

9. Turbine according to Claim 8, **characterized in that** at least one of the deformable reservoirs (5, 5a) comprises at least one bellows (12) in order to be able to deform.

10. Turbine according to Claim 8 or 9, **characterized in that** at least one of the deformable reservoirs (5, 5a) consists of a pocket made of flexible material (13).

11. Turbine according to one of Claims 1 to 10, **characterized in that** it comprises at least one greasing duct (9b) provided between the periphery of one of the two rings (2, 3) and the annular space (8) and suitable for being connected to a greasing device making it possible to inject grease into the annular space (8).

12. Turbine according to one of Claims 1 to 11, **characterized in that** it forms a wind turbine comprising a mast (21), the stator (20) being mounted so as to pivot on the mast (21) by means of a supplementary set of rolling bearing slewing rings (22) so that the axis of rotation (YY') of the rotor (23) is oriented substantially permanently in the direction of the fluid formed by the wind, the supplementary set of rolling bearing slewing rings (22) comprising two supplementary concentric rings (2, 3) pivoting relative to one another, and delimiting a supplementary annular space (8) that encloses the rolling bearing, that is filled with grease and that is closed by supplementary seals (4, 4').

13. Wind turbine according to Claim 12, **characterized in that**, in the supplementary set of rolling bearing slewing rings (22), the supplementary mobile ring is subjected to dissymmetrical forces directed essentially towards a supplementary region of the supplementary fixed ring, at least one supplementary main greasing duct leading into the supplementary annular space in a supplementary main angular sector that surrounds the supplementary region, and being connected to a supplementary main grease reservoir that is suitable for receiving grease originating from the supplementary annular space via the supplementary main greasing duct under the effect of an overpressure existing in the supplementary annular space in the supplementary main angular sector.

14. Wind turbine according to Claim 13, **characterized in that** it comprises at least one supplementary complementary greasing duct leading into the supplementary annular space in a supplementary complementary angular sector substantially diametrically opposed to the supplementary main angular sector, each supplementary complementary greasing duct being connected to a supplementary complementary grease reservoir suitable for diffusing grease in the supplementary annular space.

15. Wind turbine according to Claim 14, **characterized in that** it comprises supplementary pipes connecting the supplementary main and complementary greasing ducts together, and supplementary means for transferring the excess grease from the supplementary main angular sector to the supplementary complementary angular sector via the supplementary pipes.

16. Wind turbine according to one of Claims 13 to 15, **characterized in that** each supplementary main grease reservoir and, where appropriate, each supplementary complementary grease reservoir is deformable.

17. Wind turbine according to Claim 16, **characterized in that** at least one of the supplementary deformable reservoirs comprises at least one bellows so as to be able to deform.

18. Wind turbine according to Claim 16 or 17, **characterized in that** at least one of the supplementary deformable reservoirs consists of a pocket made of flexible material.

19. Wind turbine according to one of Claims 12 to 18, **characterized in that** it comprises at least one supplementary greasing duct provided between the periphery of one of the two supplementary rings and the supplementary annular space and suitable for being connected to a greasing device making it possible to inject grease into the supplementary annular space.

## Patentansprüche

1. Turbine für einen Antrieb durch ein Fluid und mit einem Stator (20), einem auf dem Stator (20) entlang einer Rotationsachse (YY') drehbar montierten Rotor (23), der im Wesentlichen dauerhaft parallel zur Richtung des Fluids ausgerichtet ist, und Flügeln (24), die auf dem Rotor (23) um ihre jeweilige Längsachse (XX') mittels einer entsprechenden Einheit von Drehlagerkränzen (1) drehbar montiert sind, wobei jede Einheit von Drehlagerkränzen (1) zwei konzentrische Kränze (2, 3) umfasst, die in Bezug zueinander drehen und einen Ringraum (8) begrenzen, der das Lager einschließt, der mit Schmierstoff gefüllt ist und der durch Dichtungen (4, 4') verschlossen ist, wobei der mit dem Flügel (24) fest verbundene Kranz (2, 3) asymmetrischen Belastungen ausgesetzt ist, die im Wesentlichen längs der Drehachse (YY') in einem Haupt-Winkelabschnitt (11) des anderen Kranzes (3, 2) gerichtet sind, wobei wenigstens ein Haupt-Schmierstoffkanal (9) in den Haupt-Winkelabschnitt (11) in den Ringraum (8) mündet, wobei jeder Haupt-Schmierstoffkanal (9) mit einem korrespondierenden Haupt-Schmierstoffreservoir (5) verbunden ist, das den vom Ringraum (8) durch den Haupt-Schmierstoffkanal (9) unter der Wirkung eines in dem Ringraum (8) am Haupt-Winkelabschnitt (11) herrschenden Überdrucks kommenden Schmierstoff aufnehmen kann, wobei der Haupt-Winkelabschnitt (11) entweder die Region stromabwärts in Bezug zum Fluid ist, wenn der innere Kranz (3) an dem Flügel (24) festgelegt ist, oder die stromaufwärts liegende Region ist, wenn dieser am Rotor (23) festgelegt ist.

2. Turbine nach Anspruch 1, **dadurch gekennzeichnet, dass** ein Haupt-Schmierstoffreservoir (5) in einer Region (R) angeordnet ist, die im Wesentlichen um den Radius parallel zur Rotationsachse (YY') liegt.

3. Turbine nach Anspruch 1 oder 2, **dadurch gekennzeichnet, dass** diese zwei Haupt-Schmierstoffreservoire (5) umfasst, die symmetrisch in Bezug zur Rotationsachse (YY') angeordnet sind.

4. Turbine nach einem der Ansprüche 1 bis 3, **dadurch gekennzeichnet, dass** diese wenigstens einen Komplementär-Schmierstoffkanal (9a) umfasst, der in den Ringraum (8) in einem Komplementär-Winkelabschnitt (11a) im Wesentlichen diametral gegenüber dem Haupt-Winkelabschnitt (11) mündet, wobei jeder Komplementär-Schmierstoffkanal (9a) mit einem korrespondierenden Komplementär-Schmierstoffreservoir (5a) verbunden ist, das den Schmierstoff in dem Ringraum (8) verteilen kann.

5. Turbine nach Anspruch 4, **dadurch gekennzeichnet, dass** ein Komplementär-Schmierstoffreservoir (5a) in einer Position diametral gegenüber diesem Haupt-Schmierstoffreservoir (5) angeordnet ist.

6. Turbine nach Anspruch 4 oder 5, **dadurch gekennzeichnet, dass** diese zwei Komplementär-Schmierstoffreservoire (5a) umfasst, die symmetrisch in Bezug zur Rotationsachse (YY') angeordnet sind.

7. Turbine nach einem der Ansprüche 4 bis 6, **dadurch gekennzeichnet, dass** diese Leitungen (14) umfasst, welche die Haupt- und Komplementär-Schmierstoffkanäle (9, 9a) untereinander verbinden, und Mittel (15), um den überschüssigen Schmierstoff aus dem Hauptwinkelabschnitt (11) zum komplementären Winkelabschnitt (11a) über die Leitungen (14) zu überführen.

8. Turbine nach einem der Ansprüche 1 bis 7, **dadurch gekennzeichnet, dass** jedes Haupt-Schmierstoffreservoir (5) und gegebenenfalls jedes Komplementär-Schmierstoffreservoir (5a) verformbar ist.

9. Turbine nach Anspruch 8, **dadurch gekennzeichnet, dass** wenigstens eines der verformbaren Reservoire (5, 5a) wenigstens einen Balg (12) umfasst, um sich verformen zu können.

10. Turbine nach Anspruch 8 oder 9, **dadurch gekennzeichnet, dass** wenigstens eines der verformbaren Reservoire (5, 5a) aus einer Tasche (13) aus flexiblem Material gebildet ist.

11. Turbine nach einem der Ansprüche 1 bis 10, **dadurch gekennzeichnet, dass** diese wenigstens einen Schmierstoffkanal (9b) umfasst, der zwischen dem Umfang eines der beiden Kränze (2, 3) und dem Ringraum (8) vorgesehen ist und mit einer Schmierstoffvorrichtung verbunden werden kann, die es ermöglicht, den Schmierstoff in den Ringraum (8) einzuspritzen.

12. Turbine nach einem der Ansprüche 1 bis 11, **dadurch gekennzeichnet, dass** sie ein Windrad mit einem Masten (21) bildet, wobei der Stator (20) mit einer zusätzlichen Einheit von Drehlagerkränzen (22) an dem Mast (21) drehbar montiert ist, derart, dass die Rotationsachse (YY') des Rotors (23) im Wesentlichen dauerhaft in Richtung des durch den Wind gebildeten Fluids orientiert ist, wobei die zusätzliche Einheit von Drehlagerkränzen (22) zwei zusätzliche konzentrische Kränze (2, 3) aufweist, die in Bezug zueinander drehen und einen zusätzlichen Ringraum (8) begrenzen, der das Lager einschließt, der mit Schmierstoff gefüllt ist und der durch zusätzliche Dichtungen (4, 4') geschlossen ist.

13. Windrad nach Anspruch 12, **dadurch gekennzeichnet, dass** in der zusätzlichen Einheit von Drehlagerkränzen (22) der bewegliche zusätzliche Kranz asymmetrischen Beanspruchungen ausgesetzt ist, die im Wesentlichen zur zusätzlichen Region des zusätzlichen festliegenden Kranzes gerichtet sind, wobei wenigstens ein zusätzlicher Hauptkanal für Schmierstoff in den zusätzlichen Ringraum im zusätzlichen Haupt-Winkelabschnitt mündet, der die zusätzliche Region umgibt, und mit einem zusätzlichen Haupt-Schmierstoffreservoir verbunden ist, das den vom zusätzlichen Ringraum durch den zusätzlichen Haupt-Schmierstoffkanal unter der Wirkung eines in dem zusätzlichen Ringraum an dem zusätzlichen Haupt-Winkelabschnitt herrschenden Überdrucks kommenden Schmierstoff aufnehmen kann.

14. Windrad nach Anspruch 13, **dadurch gekennzeichnet, dass** dieses wenigstens einen zusätzlichen Komplementär-Schmierstoffkanal umfasst, der in den zusätzlichen Ringraum in einem zusätzlichen Komplementär-Winkelabschnitt im Wesentlichen diametral gegenüber dem zusätzlichen Haupt-Winkelabschnitt mündet, wobei jeder zusätzliche Komplementär-Schmierstoffkanal mit einem zusätzlichen Komplementär-Schmierstoffreservoir verbunden ist, das den Schmierstoff in den zusätzlichen Ringraum verteilen kann.

15. Windrad nach Anspruch 14, **dadurch gekennzeichnet, dass** dieses zusätzliche Leitungen umfasst, welche die zusätzlichen Haupt- und Komplementär-Schmierstoffkanäle untereinander verbindet, und zusätzliche Mittel, um den überschüssigen Schmierstoff vom zusätzlichen Haupt-Winkelabschnitt zum zusätzlichen Komplementär-Winkelabschnitt über die zusätzlichen Leitungen zu überführen.

16. Windrad eines der Ansprüche 13 bis 15, **dadurch gekennzeichnet, dass** jeder zusätzliche Haupt-Schmierstoffkanal und gegebenenfalls jeder zusätzliche Komplementär-Schmierstoffkanal verformbar ist.

17. Windrad nach Anspruch 16, **dadurch gekennzeichnet, dass** wenigstens eines der zusätzlichen verformbaren Reservoire wenigstens einen Balg umfasst, um sich verformen zu können.

18. Windrad nach Anspruch 16 oder 17, **dadurch gekennzeichnet, dass** wenigstens eines der zusätzlichen verformbaren Reservoire durch eine Tasche aus flexiblem Material gebildet ist.

19. Windrad nach einem der Ansprüche 12 bis 18, **dadurch gekennzeichnet, dass** dieses wenigstens einen zusätzlichen Schmierstoffkanal umfasst, der zwischen dem Umfang eines der zwei zusätzlichen Kränze und dem zusätzlichen Ringraum vorgesehen ist und mit einer Schmierstoffvorrichtung verbunden werden kann, die ermöglicht, den Schmierstoff in den zusätzlichen Ringraum einzuspritzen.
